# FASCICULE DE BREVET EUROPEEN

(11) **EP 3 405 006 B1**
(45) Date de publication et mention de la délivrance du brevet: **30.09.2020**
(21) Numéro de dépôt: 18172068.1
(22) Date de dépôt: 14.05.2018
(51) Int. Cl.: H05B 45/44

(54) **SOURCE DE COURANT PARTAGÉE PAR PLUSIEURS ÉMETTEURS DE LUMIÈRE**
STROMQUELLE, DIE AUF MEHRERE LICHTSENDER AUFGETEILT IST
CURRENT SOURCE SHARED BY A PLURALITY OF LIGHT EMITTERS

(30) Priorité: 19.05.2017 FR 1754480
(43) Date de publication de la demande: 21.11.2018
(73) Titulaire: Valeo Vision, 93012 Bobigny Cedex (FR)
(72) Inventeur: FAIVRE, Arnaud, 93012 BOBIGNY Cedex (FR); DOLMAIRE, Lionel, 93012 BOBIGNY Cedex (FR)
(74) Mandataire: Valeo Vision

(56) Documents cités:
- WO-A1-2016/142198
- US-A1- 2008 258 695
- US-A1- 2012 200 229
- US-A1- 2015 137 689
- US-A1- 2015 373 790

## Description

L'invention a trait au domaine de la signalisation lumineuse et de l'éclairage, notamment pour les véhicules automobiles.

Les sources lumineuses du type diode à électroluminescence (LED) sont de plus en plus couramment utilisées, notamment dans le domaine de la signalisation lumineuse et de l'éclairage pour les véhicules automobiles. Ce type de source lumineuse est polarisé et est habituellement alimenté avec une gestion du courant la parcourant afin notamment de contrôler sa température et sa couleur (pour les modèles chromatiques) ou spectre d'émission (pour les modèles émettant une lumière blanche). A cet effet, une source de courant est habituellement prévue de manière spécifique pour une LED.

Or les sources de courant présentent un coût non négligeable, ce qui peut s'avérer particulièrement pénalisant dans le cadre d'un module comprenant un nombre important de sources lumineuses.

Le document US2015/373790 A1 divulgue un module lumineux, dans lequel un circuit d'alimentation électrique comprend une source de courant reliée par des interrupteurs à des sources de lumière, et un circuit de commande desdits interrupteurs, de manière à pouvoir alimenter de manière sélective chacune desdites sources de lumière avec la source de courant.

L'invention a pour objectif de pallier au moins un des inconvénients de l'état de la technique susmentionné. Plus particulièrement, l'invention a pour objectif de proposer une alimentation de sources lumineuses qui soit économique et performante. L'invention est définie par le module lumineux de la revendication 1. Les modes de réalisation préférés de l'invention sont définis par les revendications dépendantes.

L'invention a pour objet un module lumineux comprenant une source lumineuse avec un support et au moins deux émetteurs de lumière disposés sur ledit support et ayant une électrode commune ; un circuit d'alimentation électrique des émetteurs de lumière ; remarquable en ce que le circuit d'alimentation électrique comprend une source de courant reliée par des interrupteurs aux émetteurs de lumière de la source lumineuse, et un circuit de commande desdits interrupteurs, de manière à pouvoir alimenter de manière sélective chacun desdits émetteurs avec la source de courant. Avantageusement, le circuit de commande est configuré pour alimenter chacun des émetteurs de lumière durant des périodes distinctes, c'est-à-dire sans recouvrement.

Selon l'invention, les interrupteurs comprennent un premier et un deuxième interrupteurs, la source de courant comprenant une borne d'entrée de courant et une borne de sortie de courant reliées par le premier interrupteur et le deuxième interrupteur, respectivement, à l'électrode commune des émetteurs de lumière.

Selon l'invention, chacun des émetteurs de lumière de la source lumineuse comprend une électrode spécifique, le module comprenant un circuit de bouclage desdites électrodes, les interrupteurs comprenant un troisième et un quatrième interrupteurs, les bornes d'entrée et de sortie de courant de la source de courant étant reliées audit circuit de bouclage par les troisième et quatrième interrupteurs, respectivement.

Selon un mode avantageux de l'invention, chacun des troisième et quatrième interrupteurs est configuré pour, à l'état fermé, rendre passant un des émetteurs de lumière.

Selon l'invention, le circuit de bouclage comprend une source de tension.

Selon l'invention, chacun des émetteurs de lumière de la source lumineuse est une diode à électroluminescence avec une cathode et une anode, l'électrode commune de la source lumineuse correspondant à une cathode et une anode desdits émetteurs.

Selon un mode avantageux de l'invention, les interrupteurs peuvent être des transistors à effet de champ à grille isolée.

Selon un mode avantageux de l'invention, le circuit de commande des interrupteurs est configuré pour alimenter les émetteurs de lumière en alternance, lorsque lesdits émetteurs sont au nombre de deux par source lumineuse, ou de manière successive et en boucle, lorsque lesdits émetteurs sont au nombre de trois ou plus par source lumineuse, à une fréquence d'au moins 100 Hz.

Selon l'invention, les émetteurs de lumière de la source lumineuse sont configurés pour émettre des spectres de lumière blanche avec des températures de couleur différentes l'une de l'autre d'au moins 1000°K.

Selon un mode avantageux de l'invention, les émetteurs de lumière de la source lumineuse sont configurés pour émettre, respectivement, des lumières monochromatiques différentes.

Selon un mode avantageux de l'invention, les émetteurs de lumière de la source lumineuse sont configurés pour émettre, respectivement, de la lumière rouge, verte et bleue.

Selon un mode avantageux de l'invention, le circuit de commande des interrupteurs est configuré pour alimenter les émetteurs de lumière suivant un signal modulé en largeur d'impulsions.

Selon un mode avantageux de l'invention, ledit module comprend plusieurs sources lumineuses et le circuit d'alimentation comprend une source de courant commune aux sources lumineuses et des interrupteurs pour relier électriquement la source de courant commune à chaque source lumineuse.

Selon un mode avantageux de l'invention, le circuit de commande des interrupteurs est commun pour les interrupteurs des sources lumineuses et sources de courant.

Selon un mode avantageux de l'invention, les sources lumineuses sont activables de manière sélective, le module étant un module d'éclairage adaptatif.

Selon un mode avantageux de l'invention, le module est un module d'éclairage de l'intérieur de l'habitacle d'un véhicule automobile, notamment un plafonnier.

Les mesures de l'invention sont intéressantes en ce qu'elles permettent de mutualiser une source de courant auprès de plusieurs émetteurs de lumière d'une source lumineuse. Cette mutualisation permet au minimum de réduire de moitié le nombre de sources de courant nécessaires. Dans le cas d'une source lumineuse comprenant trois émetteurs de lumière, la réduction du nombre de sources de courant est alors d'un facteur 3. De plus, le circuit de commande des interrupteurs peut piloter les interrupteurs en modulation de largeur d'impulsion de manière à contrôler le courant les parcourant. Par modulation de largeur d'impulsion, on entend une telle modulation durant chacunes des phases d'alimentation d'un ou de chacun des émetteurs de lumière.

D'autres caractéristiques et avantages de la présente invention seront mieux compris à l'aide de la description et des dessins parmi lesquels :
- La figure 1 est un schéma électrique d'alimentation de deux sources lumineuses du type LED, selon l'état de la technique ;
- La figure 2 est un schéma électrique d'alimentation de deux émetteurs de lumière d'une même source lumineuse, suivant l'invention.

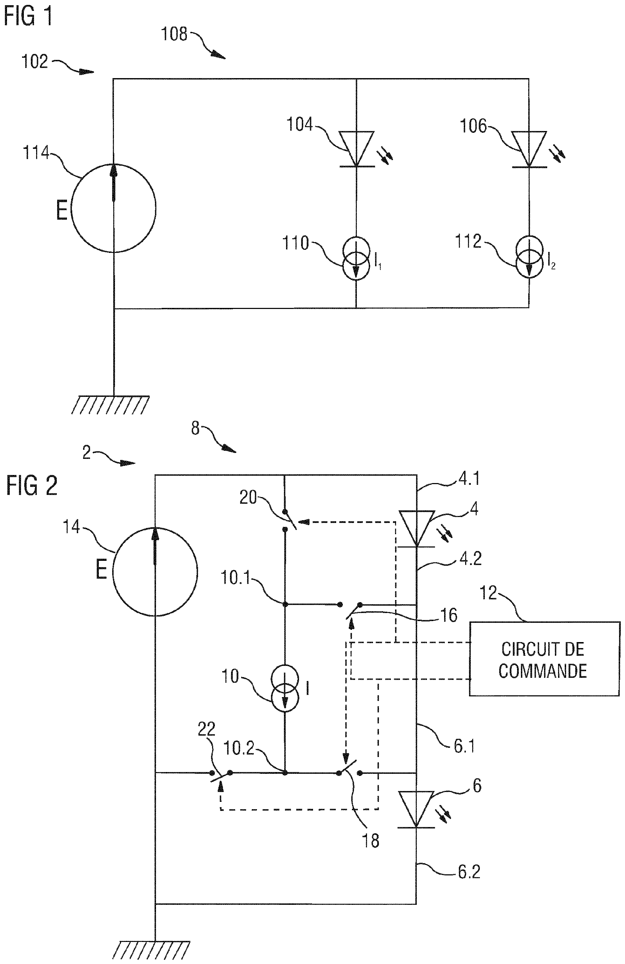

La figure 1 illustre un module lumineux 102, selon l'état de la technique, comprenant deux sources lumineuses 104 et 106 du type LED. Plus particulièrement, la figure 1 illustre un circuit d'alimentation 108 des sources lumineuses 104 et 106 du module en question. Comme cela est visible, le circuit d'alimentation 108 comprend deux sources de courant 110 et 112 reliées électriquement en série avec les sources lumineuses 104 et 106, respectivement. Les sources lumineuses et leurs sources de courant respectives sont branchées en parallèles et le circuit d'alimentation 108 comprend également un circuit de bouclage des sources lumineuses et sources de courant en parallèles, le circuit de bouclage comprenant en l'occurrence une source de tension 114. Les sources de courant 110 et 112 comprennent des moyens de régulation du courant parcourant les sources lumineuses 104 et 106, généré par la source de tension 114. De tels moyens de régulation de courant sont en soi bien connus de l'homme de métier.

La figure 2 illustre un schéma d'alimentation électrique 8 d'un module lumineux selon l'invention. Similairement à la figure 1, le module comprend deux émetteurs lumineux 4 et 6 du type LED. Cependant, contrairement à la figure 1, ces deux émetteurs lumineux 4 et 6 sont disposés sur un même support et font ainsi partie d'un même composant constituant une source lumineuse 4/6 avec deux zones d'émission de lumières, ces deux zones pouvant être alimentées de manière indépendante. Plus précisément le premier émetteur 4 comprend une anode 4.1 et une cathode 4.2 et, similairement, le deuxième émetteur 6 comprend une anode 6.1 et une cathode 6.2. La cathode 4.2 du premier émetteur 4 est directement reliée électriquement avec l'anode 6.1 du deuxième émetteur, formant alors une électrode commune. L'anode 4.1 et la cathode 6.2 forment alors les deux autres électrodes des trois électrodes de la source lumineuse.

Le circuit d'alimentation 8 comprend une source de courant 10 commune pour alimenter, en temps partagé, les émetteurs de lumière 4 et 6. En l'occurrence, une seule source de courant 10 est prévue, étant toutefois entendu qu'il est envisageable d'en prévoir plusieurs, notamment disposées en parallèle, ces sources de courant étant alors communes aux émetteurs de lumière. La source de courant 10 est reliée électriquement aux électrodes de la source lumineuse au moyen des interrupteurs 16, 18, 20 et 22. Plus précisément, la source de courant 10 comprend une première borne 10.1 d'entrée de courant et une deuxième borne 10.2 de sortie de courant, ces deux bornes assurant la connexion électrique de la source de courant. Chacune des bornes 10.1 et 10.2 est reliée électriquement à l'électrode commune 4.2/6.1 de la source lumineuse via les interrupteurs 16 et 18, respectivement. Les bornes 10.1 et 10.2 sont également reliées au circuit de bouclage de la source lumineuse 4/6 via les interrupteurs 20 et 22. Plus précisément, la borne 10.1 d'entrée de courant de la source de courant 10 est reliée à la borne positive de la source de tension 14 via l'interrupteur 20, de sorte que la fermeture dudit interrupteur court-circuite le premier émetteur de lumière 4. Similairement, la borne 10.2 de sortie de courant de la source de courant 10 est reliée à la borne négative, qui est en l'occurrence à la masse, de la source de tension 14 via l'interrupteur 22. La fermeture du cet interrupteur a alors pour effet de court-circuiter le deuxième émetteur de lumière 6.

Le circuit d'alimentation 8 comprend également un circuit de commande 12 des interrupteurs 16, 18, 20 et 22. Comme cela est visible à la figure 2, ce circuit peut être configuré pour commander, de manière sélective, les interrupteurs 16 et 22, et les interrupteurs 18 et 20. Ces interrupteurs peuvent être avantageusement des transistors à effet de champ à grille isolée. En l'absence de signal de commande, ils sont ouverts et ne laissent pas passer de courant.

Dans une premier mode de commande, seuls les interrupteurs 16 et 22 sont fermés. Cela signifie alors que le courant généré par la source de tension 14 circule exclusivement dans le premier émetteur de lumière 4, en passant par la source de courant 10 assurant la régulation du courant. Dans un deuxième mode de commande, seuls les interrupteurs 18 et 20 sont fermés, signifiant que le courant circule alors exclusivement dans le deuxième émetteur de lumière 6.

Le circuit de commande 12 peut ainsi assurer un partage du temps de connexion de la source de courant 10 entre les deux émetteurs de lumière 4 et 6. Ainsi une seule source de courant peut alimenter plusieurs émetteurs de lumière, conduisant alors à une réduction du nombre de sources de courant. Ce partage est particulièrement intéressant, notamment dans le cadre d'une régulation du courant par modulation en largeur d'impulsions, plus couramment désignée par l'acronyme PWM de l'expression anglo-saxonne « Pulse Width Modulation ». En effet, le fait d'alimenter des sources lumineuses de cette manière signifie qu'une partie seulement de la puissance d'alimentation est utilisée, ce qui rend alors le partage ou la mutualisation d'une source de courant auprès de plusieurs émetteurs de lumière d'autant plus intéressant.

Le circuit de commande 12 est configuré pour basculer entre les deux modes en question à une fréquence donnée, comme par exemple supérieure ou égale à 100 Hz, préférentiellement supérieure ou égale à 200 Hz. De la sorte, les émetteurs de lumière donnent l'impression d'être allumés en permanence tout en étant alimentés de manière partagée. Les signaux de commande des interrupteurs peuvent également présenter une modulation en largeur d'impulsions de manière à, outre d'assurer le partage de la source de courant, réguler le courant moyen durant chacun des modes de partage. Dans ce cas, la source de courant peut être configurée ou construite de manière plus simple, comme par exemple de manière à fournir un courant constant.

Dans l'exemple qui vient d'être décrit, la source lumineuse comprend deux émetteurs de lumière 4 et 6. Il est toutefois entendu qu'elle peut comprendre davantage d'émetteurs de lumière, comme par exemple trois. Dans ce cas, il est possible de prévoir deux interrupteurs supplémentaires. Le troisième émetteur de lumière peut être disposé en parallèle à l'un des premier et deuxième émetteurs 4 et 6. Les interrupteurs additionnels peuvent alors être disposés de manière à ce qu'un interrupteur soit présent dans chacune des deux branches parallèles, permettant alors de sélectionner la branche qui sera parcourue par le courant. Il est aussi entendu que d'autres configurations sont possibles.

La source lumineuse 4/6 peut être du type produisant de la lumière blanche. Dans ce cas, les émetteurs de lumière peuvent être configuré pour produite de la lumière avec des températures de couleur différents, cette différence pouvant être supérieure ou égale à 1000°K. Plus précisément, un des émetteurs peut produire une lumière blanche dite chaude, c'est-à-dire avec une température de couleur commençant à 2700°K, et l'autre peut produire une lumière blanche dite froide, c'est-à-dire avec une température de couleur finissant à 6500°K. L'alimentation des deux émetteurs produit alors une lumière blanche avec une température de couleur intermédiaire, dépendant notamment du partage de la source de courant.

De manière alternative, la source lumineuse peut être du type chromatique, c'est-à-dire produisant différentes couleurs quasi-monochromatique. A titre d'exemple, elle peut comprendre trois émetteurs de lumière, à savoir un premier émetteur produisant une lumière rouge, un deuxième produisant une lumière verte et un troisième produisant une lumière bleue. En fonction notamment du partage de la source de courant entre les trois émetteurs en question, différentes couleurs peuvent être obtenues.

Il est aussi à noter que le module lumineux peut comprendre plusieurs, voire un grand nombre de sources lumineuses, et des sources de courant correspondantes. Ces sources lumineuses peuvent alors être agencées sous forme de matrice. Elles peuvent être alimentées de manière discrétionnaire.

## Revendications

1. Module lumineux (2) comprenant :
- une source lumineuse avec un support et au moins deux émetteurs de lumière (4, 6) disposés sur ledit support et ayant une électrode (4.2/6.1) commune ;
- un circuit d'alimentation électrique (8) des émetteurs de lumière (4, 6) ; le circuit d'alimentation électrique (8) comprend une source de courant (10) reliée par des interrupteurs (16, 18, 20, 22) aux émetteurs de lumière (4, 6) de la source lumineuse, et un circuit de commande (12) desdits interrupteurs (16, 18, 20, 22), de manière à pouvoir alimenter de manière sélective chacun desdits émetteurs (4, 6) avec la source de courant (10), les émetteurs de lumière (4, 6) de la source lumineuse étant configurés pour émettre des spectres de lumière blanche avec des températures de couleur différentes l'une de l'autre d'au moins 1000°K, et en ce que les interrupteurs (16, 18, 20, 22) comprennent un premier et un deuxième interrupteurs (16, 18), la source de courant (10) comprenant une borne d'entrée de courant (10.1) et une borne de sortie de courant (10.2) reliées par le premier interrupteur (16) et le deuxième interrupteur (18), respectivement, à l'électrode commune (4.2/6.1) des émetteurs de lumière (4, 6), le module lumineux (2) étant **caractérisé en ce que** chacun des émetteurs de lumière (4, 6) de la source lumineuse comprend une électrode spécifique (4.1, 6.2), le module (2) comprenant un circuit de bouclage desdites électrodes (4.1, 6.2), les interrupteurs (16, 18, 20, 22) comprenant un troisième et un quatrième interrupteurs (20, 22), les bornes d'entrée et de sortie de courant (10.1, 10.2) de la source de courant (10) étant reliées audit circuit de bouclage (14) par les troisième et quatrième interrupteurs (20, 22), respectivement, **en ce que** le circuit de bouclage comprend une source de tension (14), et **en ce que** chacun des émetteurs de lumière (4, 6) de la source lumineuse est une diode à électroluminescence avec une cathode (4.2, 6.2) et une anode (4.1, 6.1), l'électrode commune (4.2/6.1) de la source lumineuse correspondant à une cathode (4.2) et une anode (6.1) desdits émetteurs (4, 6).

2. Module lumineux (2) selon la revendication 1, **caractérisé en ce que** chacun des troisième et quatrième interrupteur (20, 22) est configuré pour, à l'état fermé, court-circuiter un des émetteurs de lumière (4, 6).

3. Module lumineux (2) selon l'une des revendications 1 à 2, **caractérisé en ce que** les interrupteurs (16, 18, 20, 22) sont des transistors à effet de champ à grille isolée.

4. Module lumineux (2) selon l'une des revendications 1 à 3, **caractérisé en ce que** le circuit de commande (12) des interrupteurs (16, 18, 20, 22) est configuré pour alimenter les émetteurs de lumière (4, 6) de la source lumineuse en alternance, lorsque lesdits émetteurs sont au nombre de deux par source lumineuse, ou de manière successive et en boucle, lorsque lesdits émetteurs sont au nombre de trois ou plus par source lumineuse, à une fréquence d'au moins 200 Hz.

5. Module lumineux (2) selon l'une des revendications 1 à 4, **caractérisé en ce que** le circuit de commande (12) des interrupteurs (16, 18, 20, 22) est configuré pour alimenter les émetteurs de lumière (4, 6) de la source lumineuse suivant un signal modulé en largeur d'impulsions.

6. Module lumineux (2) selon l'une des revendications 1 à 5, **caractérisé en ce que** ledit module comprend plusieurs des sources lumineuses (4/6) et le circuit d'alimentation (8) comprend une source de courant (10) par source lumineuse (4, 6) et des interrupteurs (16, 18, 20, 22) pour relier électriquement chaque source de courant (10) à la source lumineuse correspondante (4/6).

7. Module lumineux (2) selon la revendication 6, **caractérisé en ce que** le circuit de commande (12) des interrupteurs (16, 18, 20, 22) est commun pour les interrupteurs des sources lumineuses et sources de courant.

8. Module lumineux (2) selon l'une des revendications 6 et 7, **caractérisé en ce que** les sources lumineuses (4/6) sont activables de manière sélective, le module étant un module d'éclairage adaptatif.

## Patentansprüche

1. Lichtmodul (2) bestehend aus :
- eine Lichtquelle mit einem Träger und mindestens zwei Lichtemittern (4, 6), die auf dem Träger angeordnet sind und eine gemeinsame Elektrode (4.2/6.1) haben;
- eine Stromversorgungsschaltung (8) für die Lichtemitter (4, 6) ;
die Stromversorgungsschaltung (8) eine Stromquelle (10), die über Schalter (16, 18, 20, 22) mit den Lichtemittern (4, 6) der Lichtquelle verbunden ist, und eine Steuerschaltung (12) zum Steuern der Schalter (16, 18, 20, 22) umfasst, um jeden der Emitter (4, 6) selektiv mit der Stromquelle (10) versorgen zu können, wobei die Lichtemitter (4, 6) der Lichtquelle so konfiguriert sind, dass sie Spektren von weißem Licht mit Farbtemperaturen emittieren, die sich voneinander um mindestens 1000°K unterscheiden, und dass die Schalter (16, 18, 20, 22) einen ersten und einen zweiten Schalter (16, 18) umfassen, wobei die Stromquelle (10) eine Stromeingangsklemme (10) umfasst.1) und eine Stromausgangsklemme (10.2), die über den ersten Schalter (16) bzw. den zweiten Schalter (18) mit der gemeinsamen Elektrode (4.2/6) verbunden ist.1) der Lichtemitter (4, 6), wobei das Lichtmodul (2) **dadurch gekennzeichnet ist, dass** jeder der Lichtemitter (4, 6) der Lichtquelle eine spezifische Elektrode (4.1, 6.2) umfasst, wobei das Modul (2) eine Schleifenschaltung (14) der Elektroden (4.1, 6.2) umfasst, wobei die Schalter (16, 18, 20, 22) einen dritten und einen vierten Schalter (20, 22) umfassen, wobei die Stromeingangs- und -ausgangsklemmen (10.1, 10.2).2) der Stromquelle (10) mit der Rückkopplungsschaltung (14) über den dritten bzw. vierten Schalter (20, 22) verbunden ist, dass die Rückkopplungsschaltung eine Spannungsquelle (14) umfasst und dass jeder der Lichtemitter (4, 6) der Lichtquelle eine Leuchtdiode mit einer Kathode (4.2, 6.2) und einer Anode (4.1, 6.1), wobei die gemeinsame Elektrode (4.2/6.1) der Lichtquelle einer Kathode (4.2) und einer Anode (6.1) der genannten Emitter (4, 6) entspricht.

2. Lichtmodul (2) nach Anspruch 1, **dadurch gekennzeichnet, dass** jeder der dritten und vierten Schalter (20, 22) so konfiguriert ist, dass er im geschlossenen Zustand einen der Lichtemitter (4, 6) kurzschließt.

3. Lichtmodul (2) nach einem der Ansprüche 1 bis 2, **dadurch gekennzeichnet, dass** die Schalter (16, 18, 20, 22) Feldeffekttransistoren mit isoliertem Gate sind.

4. Lichtmodul (2) nach einem der Ansprüche 1 bis 3, **dadurch gekennzeichnet, dass** die Steuerschaltung (12) der Schalter (16, 18, 20, 22) so konfiguriert ist, dass sie die Lichtemitter (4, 6) der Lichtquelle abwechselnd, wenn die Emitter zwei pro Lichtquelle sind, oder nacheinander und in einer Schleife, wenn die Emitter drei oder mehr pro Lichtquelle sind, mit einer Frequenz von mindestens 200 Hz versorgt.

5. Lichtmodul (2) nach einem der Ansprüche 1 bis 4, **dadurch gekennzeichnet, dass** die Steuerschaltung (12) der Schalter (16, 18, 20, 22) so konfiguriert ist, dass sie die Lichtemitter (4, 6) der Lichtquelle mit einem pulsbreitenmodulierten Signal versorgt.

6. Lichtmodul (2) nach einem der Ansprüche 1 bis 5, **dadurch gekennzeichnet, dass** das Modul mehrere der Lichtquellen (4/6) umfasst und die Versorgungsschaltung (8) eine Stromquelle (10) pro Lichtquelle (4, 6) und Schalter (16, 18, 20, 22) zum elektrischen Verbinden jeder Stromquelle (10) mit der entsprechenden Lichtquelle (4/6) umfasst.

7. Lichtmodul (2) nach Anspruch 6, **dadurch gekennzeichnet, dass** der Steuerkreis (12) der Schalter (16, 18, 20, 22) für die Schalter der Lichtquellen und Stromquellen gemeinsam ist.

8. Lichtmodul (2) nach einem der Ansprüche 6 und 7, **dadurch gekennzeichnet, dass** die Lichtquellen (4/6) selektiv aktivierbar sind, wobei das Modul ein adaptives Beleuchtungsmodul ist.

## Claims

1. Light module (2) comprising :
- a light source with a carrier and at least two light emitters (4, 6) arranged on said carrier and having a common electrode (4.2/6.1) ;
- a power supply circuit (8) for the light emitters (4, 6) ;
the power supply circuit (8) comprises a current source (10) connected by switches (16, 18, 20, 22) to the light emitters (4, 6) of the light source, and a control circuit (12) for controlling said switches (16, 18, 20, 22) so as to be able to selectively supply each of said emitters (4, 6) with the current source (10), the light emitters (4, 6) of the light source being configured to emit spectra of white light with colour temperatures differing from each other by at least 1000°K, and in that the switches (16, 18, 20, 22) comprise a first and a second switch (16, 18), the current source (10) comprising a current input terminal (10).1) and a current output terminal (10.2) connected via the first switch (16) and the second switch (18), respectively, to the common electrode (4.2/6).1) of the light emitters (4, 6), the light module (2) being **characterized in that** each of the light emitters (4, 6) of the light source comprises a specific electrode (4.1, 6.2), the module (2) comprising a looping circuit (14) of said electrodes (4.1, 6.2), the switches (16, 18, 20, 22) comprising a third and a fourth switch (20, 22), the current input and output terminals (10.1, 10.2).2) of the current source (10) being connected to said loopback circuit (14) via the third and fourth switches (20, 22), respectively, **in that** the loopback circuit comprises a voltage source (14), and **in that** each of the light emitters (4, 6) of the light source is a light-emitting diode with a cathode (4.2, 6.2) and an anode (4.1, 6.1), the common electrode (4.2/6.1) of the light source corresponding to a cathode (4.2) and an anode (6.1) of said emitters (4, 6).

2. Light module (2) according to claim 1, **characterized in that** each of the third and fourth switches (20, 22) is configured to short-circuit one of the light emitters (4, 6) in the closed state.

3. Light module (2) according to one of claims 1 to 2, **characterized in that** the switches (16, 18, 20, 22) are insulated gate field effect transistors.

4. Light module (2) according to one of claims 1 to 3, **characterized in that** the control circuit (12) of the switches (16, 18, 20, 22) is configured to supply the light emitters (4, 6) of the light source alternately, when said emitters are two per light source, or successively and in a loop, when said emitters are three or more per light source, at a frequency of at least 200 Hz.

5. Light module (2) according to one of claims 1 to 4, **characterized in that** the control circuit (12) of the switches (16, 18, 20, 22) is configured to supply the light emitters (4, 6) of the light source with a pulse-width-modulated signal.

6. Light module (2) according to one of claims 1 to 5, **characterized in that** said module comprises several of the light sources (4/6) and the supply circuit (8) comprises one current source (10) per light source (4, 6) and switches (16, 18, 20, 22) for electrically connecting each current source (10) to the corresponding light source (4/6).

7. Light module (2) according to claim 6, **characterized in that** the control circuit (12) of the switches (16, 18, 20, 22) is common for the switches of the light sources and power sources.

8. Light module (2) according to one of claims 6 and 7, **characterized in that** the light sources (4/6) are selectively activatable, the module being an adaptive lighting module.
